Europäisches Patentamt

European Patent Office

Office européen des brevets

(19)

(11) Veröffentlichungsnummer: **0 437 695 A1**

## (12) EUROPÄISCHE PATENTANMELDUNG

(21) Anmeldenummer: **90121776.0**

(22) Anmeldetag: **14.11.90**

(51) Int. Cl.⁵: **B60R 1/06**

(30) Priorität: **16.01.90 DE 9000392 U**

(43) Veröffentlichungstag der Anmeldung:
**24.07.91 Patentblatt 91/30**

(84) Benannte Vertragsstaaten:
**AT BE CH DE DK ES FR GB IT LI NL SE**

(71) Anmelder: **HAGUS C. LUCHTENBERG GmbH & Co. KG**
**Wiesenstrasse 8-10**
**W-5650 Solingen 19(DE)**

(72) Erfinder: **Luchtenberg, Curt**
**Sonnenschein 54**
**W-5650 Solingen 19(DE)**

(74) Vertreter: **Selting, Günther, Dipl.-Ing. et al**
**Patentanwälte von Kreisler, Selting, Werner**
**Deichmannhaus am Hauptbahnhof**
**W-5000 Köln 1(DE)**

(54) **Zusatzaussenspiegel für Kraftfahrzeuge.**

(57) Der Zusatzaußenspiegel weist eine Halterung (17) auf, mit der er an dem Spiegelgehäuse (10) des Fahrzeugspiegels befestigt wird. Diese Halterung (17) besteht aus zwei Klemmorganen (18), die an der das Zusatzspiegelgehäuse (15) tragenden Stange (16) angebracht sind und am Öffnungsrand (13) des Spiegelgehäuses (10) angeklemmt werden.

FIG. 1

## ZUSATZAUSSENSPIEGEL FÜR KRAFTFAHRZEUGE

Die Erfindung betrifft einen Zusatzaußenspiegel der im Oberbegriff des Anspruchs 1 angegebenen Art.

Ein derartiger Zusatzaußenspiegel ist bekannt aus DE-GM 79 10 709. Dieser Zusatzaußenspiegel weist eine Halterung auf, mit der er gegen den Rücken des fahrzeugseitigen Außenspiegels gesetzt wird. Die Halterung ist mit zwei Klauen versehen, welche den oberen und den unteren Öffnungsrand des Fahrzeugspiegels übergreift. Eine dritte Klaue greift um den dem Fahrzeug abgewandten Öffnungsrand des fahrzeugseitigen Außenspiegels. Zur Fixierung der Halterung an dem fahrzeugseitigen Außenspiegel dient eine Klemmschraube, die die Halterung gegen den Rücken des Außenspiegels drückt. Die Halterung muß hierbei starr und sehr stabil ausgebildet sein. Außerdem erfordert sie eine gewisse Anpassung an die Form des Fahrzeugaußenspiegels, so daß für unterschiedliche Zusatzspiegel unterschiedliche Halterungen des Außenspiegels erforderlich sind. Schließlich ist die Montage der Halterung am Fahrzeugaußenspiegel zeitaufwendig, weil die Schraube festgezogen werden muß. Ferner kann der Fahrzeugspiegel durch zu starkes Festziehen der Schraube beschädigt werden.

Der Erfindung liegt die Aufgabe zugrunde, einen Zusatzaußenspiegel der im Oberbegriff des Anspruchs 1 angegebenen Art zu schaffen, der einfach im Aufbau ist, mit geringen Kosten hergestellt werden kann und kleinvolumig zu Verpacken ist.

Die Lösung dieser Aufgabe erfolgt erfindungsgemäß mit den im Anspruch 1 angegebenen Merkmalen.

Bei dem erfindungsgemäßen Fahrzeugaußenspiegel sind an der das Zusatzspiegelgehäuse tragenden Stange zwei Klemmorgane befestigt, die an einem Öffnungsrand des fahrzeugseitigen Spiegelgehäuses festgeklemmt werden können. Hierbei kann es sich wahlweise um den oberen oder den unteren Öffnungsrand des Spiegelgehäuses handeln. Die Halterung benötigt keinen den Rücken des Spiegelgehäuses überspannenden Korb, sondern sie wird lediglich an einem einzigen, im wesentlichen geraden Öffnungsrand des Spiegelsgehäuses festgeklemmt, wobei von dem Umstand Gebrauch gemacht wird, daß bei modernen Fahrzeugrückspiegeln das Spiegelglas im Spiegelgehäuse schwenkbar angebracht ist, wobei das Spiegelglas einen Abstand zum Öffnungsrand aufweist. In den dadurch entstehenden Spalt greifen die Klemmorgane ein. Die Halterung besteht somit lediglich aus einem Abschnitt der stabförmigen Stange und den daran befestigten Klemmorganen.

Ein besonderer Vorteil besteht darin, daß der Zusatzrückspiegel sich für die Anbringung an unterschiedlichen Fahrzeugspiegeln eignet. Dies ist dadurch möglich, daß für die Befestigung nur ein einziger Rand des Spiegelgehäuses benötigt wird und daß eine Abstimmung der Halterung auf die Höhe oder Tiefe des Spiegelgehäuses nicht erforderlich ist.

Das Abklappen des Zusatzrückspiegels im Falle des Auftreffens auf ein Hindernis ist dadurch gewährleistet, daß das fahrzeugseitige Spiegelgehäuse in der Regel abklappbar ausgebildet ist, so daß Fahrzeugspiegel und Zusatzspiegel gemeinsam abklappen.

Vorzugsweise ist mindestens eines der Klemmorgane in Längsrichtung der Stange verschiebbar und feststellbar, so daß der Abstand der Klemmorgane eingestellt werden kann.

Im folgenden wird unter Bezugnahme auf die Zeichnungen ein Ausführungsbeispiel der Erfindung näher erläutert.

Es zeigen:

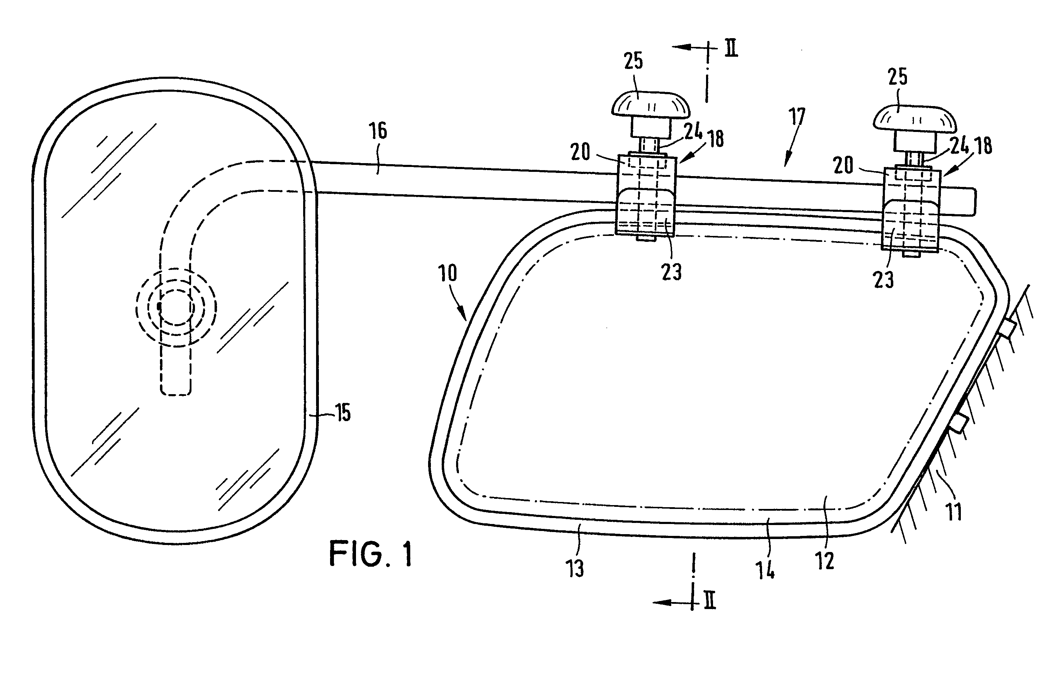

Fig. 1    eine Ansicht des an dem fahrzeugseitigen Spiegelgehäuse befestigten Zusatzrückspiegels aus der Sicht des Fahrers,

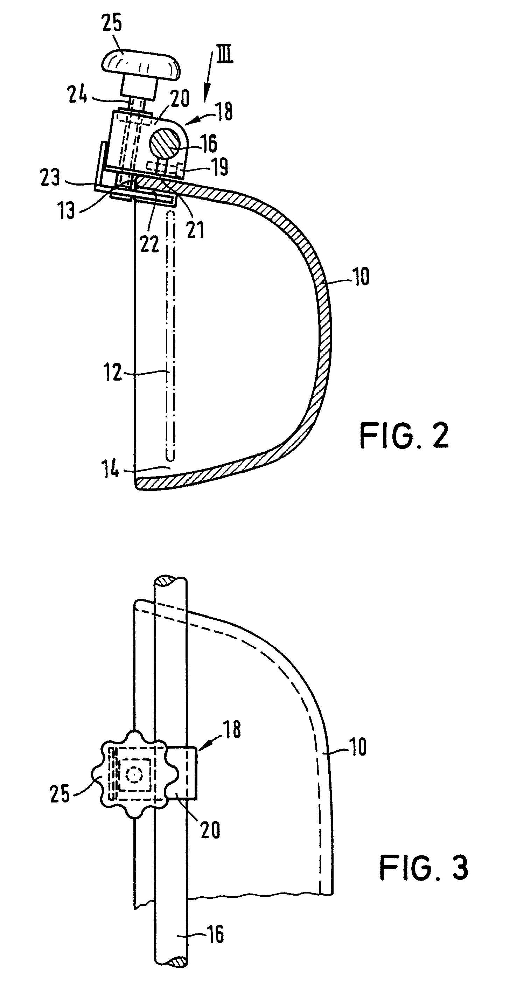

Fig. 2    einen Schnitt entlang der Linie II-II von Fig. 1, und

Fig. 3    eine Draufsicht auf die Halterung aus Richtung des Pfeiles III in Fig. 2.

In den Zeichnungen ist das Spiegelgehäuse des Fahrzeugaußenspiegels mit 10 bezeichnet. Dieses Spiegelgehäuse ist abklappbar an dem fahrzeugseitigen Spiegelfuß 11 befestigt. Im Inneren des Spiegelgehäuses 10 ist das Spiegelglas 12 angeordnet, das normalerweise an einem Verstellmechanismus angebracht und innerhalb des Spiegelgehäuses 10 verstellbar ist. Zwischen dem Spiegelglas 12 und dem Öffnungsrand 13 des Spiegelgehäuses 10 befindet sich ein umlaufender Spalt 14.

Der Zusatzaußenspiegel, der als Karavan-Spiegel bezeichnet wird, und der benutzt wird, wenn das Fahrzeug einen Anhänger mitführt, weist ein relativ weit vom Fahrzeug abstehendes Zusatzspiegelgehäuse 15 auf, das durch eine Stange 16 mit dem Spiegelgehäuse 10 des Fahrzeugspiegels verbunden ist. Die Verbindung erfolgt durch eine Halterung 17, die aus einem Abschnitt der Stange 16 und den beiden Klemmorganen 18 besteht.

Jedes der Klemmorgane 18 weist einen längs der Stange 16 verschiebbaren Block 20 auf, der mit einer Schraube 19 an der Stange 16 festklemmbar ist. An dem Block 20 befindet sich die eine Klemmfläche 21. Die andere Klemmfläche 22 befindet sich an einem Schieber 23, welcher durch eine Schraube 24 bewegbar ist. Das Gewinde der Schraube 24 steht mit dem Gewinde einer Gewindebohrung des Blocks 20 in Eingriff. An dem dem Schieber 23 abgewandten Ende der Schraube 24 befindet sich ein Drehknopf 25. Der Schieber 23 besteht aus einem L-förmig gebogenen Blech, dessen einer Schenkel die Klemmfläche 22 bildet und dessen anderer Schenkel an der Seitenfläche des Blocks 20 gleitend geführt ist, so daß der Schieber 23 sich beim Drehen der Schraube 24 nicht mitdreht.

Die Befestigung der Klemmorgane 18 am Öffnungsrand 13 des Spiegelgehäuses 10 erfolgt dadurch, daß derjenige Schenkel des Schiebers 23, der die Klemmfläche 22 aufweist, in den Spalt 14 eingeschoben wird. Wird dann durch Drehen des Handknopfs 25 die Schraube 24 festgezogen, dann bewegt sich die Klemmfläche 22 in Richtung auf die Klemmfläche 21, wobei der Öffnungsrand 13 zwischen beiden Klemmflächen eingespannt wird. Der Block 20 und der Handknopf 25 befinden sich auf der Außenseite des Spiegelgehäuses 10. Durch Festziehen beider Klemmorgane 18 wird der gesamte Zusatzrückspiegel sicher an dem fahrzeugseitigen Rückspiegel befestigt.

Bei dem dargestellten Ausführungsbeispiel ist die Halterung 17 am oberen Öffnungsrand des Fahrzeugspiegels befestigt. Es besteht auch die Möglichkeit, die Halterung am unteren Öffnungsrand anzubringen. Der Zusatzrückspiegel kann sowohl für die rechte als auch für die linke Fahrzeugseite benutzt werden, wozu entsprechende Verdrehungen der Klemmorgane 18 auf der runden Stange 16 möglich sind.

**Patentansprüche**

1. Zusatzaußenspiegel für Kraftfahrzeuge, mit einer am Spiegelgehäuses (10) des Fahrzeugaußenspiegels zu befestigenden Halterung (17), die eine seitlich abstehende Stange (16) mit einem daran befestigten Zusatzspiegelgehäuse (15) trägt,
**dadurch gekennzeichnet,**
daß die Halterung (17) zwei an der Stange (16) befestigte Klemmorgane (18) aufweist, die an einen Öffnungsrand (13) des Spiegelgehäuses (10) ansetzbar sind und jeweils zwei den Öffnungsrand klemmend zwischen sich einschließende Klemmflächen (21,22) aufweisen.

2. Zusatzaußenspiegel nach Anspruch 1, dadurch gekennzeichnet, daß jedes Klemmorgan (18) einen Block (20) aufweist, an dem die eine Klemmfläche (21) vorgesehen ist, und einen an dem Block (20) geführten Schieber (23), an dem die andere Klemmfläche (22) vorgesehen ist.

3. Zusatzaußenspiegel nach Anspruch 1 oder 2, dadurch gekennzeichnet, daß mindestens eines der Klemmorgane (18) in Längsrichtung der Stange (16) verschiebbar und feststellbar ist.

4. Zusatzaußenspiegel nach einem der Ansprüche 1 bis 3, dadurch gekennzeichnet, daß die Klemmorgane (18) an der Stange (16) drehbar und feststellbar sind.

FIG. 1

EP 0 437 695 A1

25

24

20

III

18

16

19

23

13

22 21

10

12

14

FIG. 2

18

25

20

10

16

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-U-8 531 937 (SCHWEIGER) <br> * Seite 4, Zeilen 6 - 8; Figuren 1-4 * * Seite 9, Zeilen 1 - 22 @ Seite 10, Zeilen 16 - 27 * <br> – – – | 1 | B 60 <br> R 1/06 |
| A | GB-A-1 481 824 (RAYDIOT LTD) <br> * Seite 1, Zeilen 46 - 76; Anspruch 1; Figur * <br> – – – – – | 1-4 | |

RECHERCHIERTE SACHGEBIETE (Int. Cl.5)

B 60 R

Der vorliegende Recherchenbericht wurde für alle Patentansprüche erstellt

| Recherchenort | Abschlußdatum der Recherche | Prüfer |
|---|---|---|
| Den Haag | 11 April 91 | DUBOIS B.F.J. |